# EUROPÄISCHE PATENTSCHRIFT

(11) **EP 0 673 830 B1**
(45) Veröffentlichungstag und Bekanntmachung des Hinweises auf die Patenterteilung: **17.11.1999**
(21) Anmeldenummer: 95810156.0
(22) Anmeldetag: 09.03.1995
(51) Int. Cl.: B62D 29/04, B61D 17/00

(54) **Kastengerippe**
Body framework
Ossature de caisse

(30) Priorität: 25.03.1994 CH 90194
(43) Veröffentlichungstag der Anmeldung: 27.09.1995
(73) Patentinhaber: Alusuisse Technology & Management AG, 8212 Neuhausen am Rheinfall (CH)
(72) Erfinder: Waldeck, Klaus-Dieter, CH-8954 Geroldswil (CH); Streiff, Samuel, CH-5600 Lenzburg (CH)

(56) Entgegenhaltungen:
- EP-A- 0 340 180
- CH-A- 627 982
- DE-A- 1 755 512
- DE-A- 1 956 802
- DE-A- 3 908 433
- FR-A- 2 259 697
- NL-C- 70 290

## Beschreibung

Vorliegende Erfindung betrifft ein Kastengerippe mit einer Aussenverkleidung enthaltend flächenförmige mehrschichtige Verkleidungselemente.

Es ist bekannt, beispielsweise die Wagenkasten Von Strassen- und Schienenfahrzeugen als Kastengerippe zu gestalten und die Kastengerippe mit Verkleidungselementen zu versehen. Die Qualität der Aussenflächen ist von grosser Bedeutung für die Hersteller und Benutzer von Wagenkasten. In der Regel werden Bleche oder Strangpressprofile auf dem Kastengerippe befestigt, z.B. aufgespannt und dann verschweisst. Hierbei ergeben sich immer Unebenheiten zumindest im Bereich der Schweissverbindungen. Es ist auch üblich, die Verkleidung von Wagenkasten mit mehrschichtigen Bauelementen auszuführen, wobei dann wenigstens dreischichtige Bauelemente zur Anwendang gelangen. Ebenfalls wurden schon Verkleidungsteile von Wagenkasten aus glasfaserverstärkten Kunststoffplatten ausgeführt Den bekannten Konzeptionen haftet meistens der Nachteil an, dass insbesondere bei grossen und z.B. glänzend lackierten Seiten- und Dachflächen grossflächige Unebenheiten, Wellen, Aufwölbungen und kleinflächige Verspannungen und Unebenheiten, z.B. bei seitlicher Lichteinstrahlung, unschön sichtbar werden. Bekannte Konstruktionen sind durch die Verwendung von Strangpressprofilen und Mehrschichtmaterialien in der Regel teuer.

Beispielsweise sind Aussenverkleidungen aus dünnwandigen Thermoplastleiten aus der DE-A-19 56 802 bekannt. Die CH-A-627 982 beschreibt Dachgurten und Seitenwand- oder Verkleidungsprofile in form von Strangpressprofilen.

Aufgabe vorliegender Erfindung ist es, Kastengerippe mit grossflächig glatter, wellen- und unebenheitenfreier Aussenverkleidung vorzuschlagen, wobei die Kastengerippe mit der Aussenverkleidung auf leichte Weise und somit kostengünstig herstellbar sind.

Erfindungsgemäss wird dies durch die Merkmale des Anspruches 1.

Vorteilhaft ist die glatte äussere Oberfläche aus zu einer glatten Oberfläche verdichtetem Material.

Die erste Schicht eines Verkleidungselementes, welche den Träger darstellt, kann beispielsweise ein Blech, ein Profil, ein Strangpressprofil oder ein Composite sein. Als Bleche können beispielsweise Eisen-, verzinkte Eisen-, Stahl-, Aluminium-, Magnesium-, Titan- oder Messingbleche zur Anwendung gelangen. Bevorzugt sind Aluminium-, Eisen- und verzinkte Eisenbleche. Mit Aluminium und Magnesium werden auch deren Legierungen mitumfasst. Die Dicke der Bleche kann z.B. von 0,3 bis 6 mm, zweckmässig 0,4 bis 3 mm und vorzugsweise 0,5 bis 2 mm betragen. Bleche werden als Träger bevorzugt, es können jedoch auch Profile oder Strangpressprofile, z.B. auch Aluminium angewendet werden. Andere Möglichkeiten sind Composites, z.B. Platten aus faserverstärkten Polymeren, wie glasfaser-, kohlenfaser- oder kevlarfaserverstärkte Kunststoffe der Reihe der Polyamide, der Polycarbonate, der Epoxide, usw.

Die zweite Schicht eines Verkleidungselementes ist eine Kunststoff-Platte. Die Kunststoffplatte kann beispielsweise Thermoplasten, wie Polyolefine, Polyvinylchlorid, Polystyrole, Styrol-Copolymerisate, Polystyrolschaum, Polystyrol schlagfest, Styrol-Acrylnitril-Copolymersate, Acrylnitril-Butädien-Styrol-Terpolymerisate, Acrylester-Styrol-Acrylnitil-Terpolymere, Polymethylmethacrylate, Acrylglas, Polyvinylcarbazole, Polyamide, Polycarbonate usw., oder Duroplasten, wie Phenol- oder Harnstoff-Formaldehydharze, oder Epoxidharze enthalten oder daraus bestehen. Die Kunststoffe können beispielsweise auch faserverstärkt sein.

Als Kunststoffplatten werden Hartschaumstoff-Platten angewendet. Die Hartschaumstoff-Platten sind ein geschlossenzelliger Polymerschaum und anthalten Polyvinylchlorid oder Polycarbonat oder bestehen daraus. Hartschaumstoff-Platten enthaltend überwiegend Polyvinylchlorid sind besonders bevorzugt.

Die Kunststoffplatte kann eine Dicke von 1 bis 30 mm aufweisen. Die Hartschaumstoff-Platte kann eine Dicke von 3 bis 30 mm, zweckmässig 5 bis 20 mm und vorzugsweise 8 bis 15 mm aufweisen.

Die Hartschaumstoff-Platte kann durch die Dicke hindurch gleiche oder verschiedene spezifische Dichten aufweisen und die Oberflächen können eine dichtere Struktur aufweisen als die Mittel- oder Kernschicht. Bevorzugt ist die Hart-Schaumstoff-Platte ein Integralschaum, wobei im Randbereich die Dichte am grössten ist und eine kompakte Aussenhaut aufweist und die Dichte gegen den Kern immer mehr abnimmt und einen zelligen Kern bildet.. Die Materialzusammensetzung durch die Dicke hindurch ist jedoch in der Regel homogen. Die Oberflächenbereiche sind zweckmässig derart verdichtet, dass die sichtbaren Oberflächen glatt, weitgehend porenfrei und geschlossen sind.

Die Rohdichte der Hartschaumstoff-Platte kann z.B. von 300 bis 1400 kg/m³, zweckmässig von 400 bis 800 kg/m³ und bevorzugt von 450 bis 700 kg/m³ betragen.

Geeignete Hartschaumstoff-Platten weisen typische Zugfestigkeiten nach DIN 53 455 von 10 bis 20 MPa, vorzugsweise 10 bis 16 MPa, eine Reissdehnung von 25 bis 40 %, wobei 30 bis 35 % bevorzugt sind, und eine Schlagzähigkeit nach DIN 53 453 von z.B. 10 bis 25, vorzugsweise 15 bis 22 kJ/m² auf. Vorteilhaft ist auch eine Wärmeleitzahl nach DIN 52 612 von 0,050 bis 0,090, vorzugsweise von 0,055 bis 0,085 WmK. Das Brandverhalten ist vorteilhaft nach VKF(Schweiz) V.3; DIN4102 (Deutschland) PA-III 2. 1378 B1 oder UL94 (USA) 94V-0, 94-5V und erfüllt FAR25.853(a) und MVSS302.

Der Träger und die Kunststoff-Platte können durch mechanische, physikalische oder chemische Befestigungsmittel miteinander trenn- und schubfest verbunden werden. Als solche Befestigungsmittel können Nieten, Schrauben, Stifte und dergleichen vorgesehen werden. Es ist auch möglich, die gegen den Träger gerichtete Seite der Kunststoffplatte mit einem Noppen- oder Lochmuster zu versehen und entsprechend den Träger mit einem Loch-resp. Noppenmuster auszustatten und die Kunststoff-Platte und den Träger durch Einklinken oder Einrasten der Noppen in den Löchern zu befestigen. Die Kunststoff-Platte kann auch durch klammerartige Befestigungsmittel am Träger befestigt werden. Die Kunststoff-Platten können auch durch Wärme- oder Lösungsmittel oberflächlich erweicht und auf diese Weise mit dem Träger verbunden werden. Bevorzugt wird jedoch das Kleben. Die KunststoffPlatte kann demnach ganz- oder teilflächig, z.B. über ein Klebemuster oder nur randständig, mittels eines Klebstoffes mit dem Träger verbunden werden. Geeignete Klebstoffe sind beispielsweise Hart-PVC-Kleber, Kontaktkleber auf Neopren-Basis, Polyurethan-Kleber, sowohl als Ein- als auch als Zweikomponentenkleber, oder Epoxy-Zweikomponentenkleber.

Der Träger und die Kunststoff-Platte können auch durch lösbare Befestigungsmittel, wie Klettbänder aneinander befestigt werden. Klettbänder weisen zwei Bänder auf, die aufeinandergelegt stark haften, ohne Strukturzerstörung jedoch bei einem genügend hohen Kraftaufwand voneinander getrennt werden können. Ein Band, beispielsweise eine gewobene Unterlage, enthält eingewoben oder anderweitig befestigt eine Vielzahl von Schlingen, beispielsweise aus Kunststoffasern, während das andere Band ebenfalls eine gewobene Unterlage aufweisen kann und eingewoben oder anderweitig befestigt sind eine Vielzahl von hakenartigen Kunststoffasern. Werden die beiden Bänder zusammengedrückt, greifen die Haken in die Schlingen und durch die Vielzahl von Haken und Schlingen über die Bandfläche ergibt sich eine flächenförmige Haftung der Bänder aneinander. Die Bänder weisen auf ihrer Unterseite eine relativ glatte Fläche auf. Die glatten Flächen werden bevorzugt mittels Klebstoff auf den zu verbindenden Gegenständen, d.h. dem Träger und der Kunststoff-Platte aufgebracht. Geeignete Klettbänder sind beispielsweise unter dem Markennamen VELCRO-Band in der Fachwelt bekannt.

Typische Verkleidungselemente können eine beliebige Seitenlänge aufweisen, falls diese kontinuierlich hergestellt werden, und in der Praxis sind Elemente einer Länge von 0,8 bis ca. 20 m zweckmässig und 2 bis 3 m vorteilhaft.

Die Breite der Elemente kann beispielsweise 0,3 bis 3 m betragen, wobei Breiten von 1 bis 2 m vorteilhaft sind.

Zweckmässig deckt die Aussenverkleidung Teile des oder das ganze Kastengerippe ab und wird durch ein Verkleidungselement oder eine Mehrzahl von Verkleidungselementen gebildet.

Bevorzugt werden die Verkleidungselemente als Boden-, Seitenwand- oder Dachgurten verwendet. Die Bodengurte können z.B. vom Bodengerüst bis in die Seitenwände laufen und eine längslaufende Biegung oder Abknickung enthalten. Die Seitenwandgurten verlaufen in der Regel plan über die Seitenwände und können beispielsweise unter und/oder über einer Fensterlinie oder Fensterfront angeordnet sein. Selbstverständlich kann jede Seitenwandgurte durch Türen, Fenster und dergleichen unterbrochen sein. Die Dachgurten können durch eine entsprechende Biegung oder Abknickung sowohl eine Seitenwand als auch das Dach zumindest teilweise bedecken. Die Dachgurten können auch nur die Dachverkleidung betreffen. Unter dem Begriff Aussenverkleidung wird auch die Dachverkleidung mitumfasst. Die Verkleidungselemente oder die Aussenverkleidung daraus kann auch eine oder mehrere grossflächige Wölbungen zur formalen Gestaltung eines Kastens aufweisen.

In zweckmässiger Ausführungsform kann die Aussenverkleidung von zwei oder mehreren Verkleidungselementen gebildet werden und die Verkleidungselemente können stossfrei gefügt werden. Insbesondere werden die Verkleidungselemente an ihren Stirnseiten stossfrei aneinander gefügt.

Das Kastengerippe ist durch das Anlegen der Verkleidungselemente selbsttragend. Das Kastengerippe kann beispielsweise aus Profilen, wie Winkelprofilen, C-Profilen, U-Profilen, Ein- oder Mehrkammerhohlprofilen, T- und Doppel-T-Trägern usw. aufgebaut sein. Bevorzugt ist ein Kastengerippe aus C-Profilen und Hohlkammerprofilen mit C-förmigen Ansätzen. Aus diesen Profilen können beispielsweise mit Eckverbindungsstücken und Schraubverbindungen oder Schraub-Klemmverbindungen hochstabile Kastengerippe aufgebaut werden.

Die Verkleidungselemente können an den Berührungsstellen zwischen den Profilen und den Verkleidungselementen trennfest miteinander verbunden werden. Diese Verbindung kann durch Kleben, Nieten, Schrauben usw. oder Kombinationen der Verfahren erfolgen.

Das Kastengerippe nach vorliegender Erfindung weist demnach an den vorgesehenen Stellen Verkleidungselemente auf. Zwischen den Verkleidungselementen können z.B. Fenster, Türen, Oeffnungen, Klappen, Luken etc. vorgesehen werden. Die Verkleidungselemente weisen eine ebene glatte äussere Oberfläche auf. Die äussere Oberfläche der KunststoffPlatte, kann beliebig bedruckt, lackiert, beklebt oder mit anderen Dekorationselementen versehen werden. Die Kunststoff-Platte kann auch durchgefärbt sein und sich in beliebigen Farbtönen präsentieren.

In einer bevorzugten Ausführungsform wird der Träger an den Seitenrändern abgewinkelt, umgebördelt oder eingerollt. Die Kunststoff-Platte kann entlang der Seitenrändern eine Anformung, Hinterschneidung oder eine Nut aufweisen. Die Breite der Kunststoffplatte ist vorteilhaft um ein kleines Mass, z.B. etwa 0,5 bis 5 cm, geringer als die Breite des Trägers zwischen den Seitenbegrenzungen. Beim Fügen von Träger und Kunststoffplatte erhält das entstandene Verkleidungselement entsprechend entlang einer oder beider Seitenkanten ein-oder beidseitig hinterschnittene Nuten, z.B. für die Aufnahme von Zusatzelementen. An den Stirnseiten eines Verkleidungselementes schliessen Träger und Kunststoffplatte vorteilhaft bündig ab.

Vorliegende Erfindung betrifft auch ein Verfahren zur Herstellung von Aussenverkleidungen für Kastengerippe nach vorliegender Erfindung, wobei der Träger als Endlosmaterial zuläuft, die Querschnittsform durch Walzen oder Biegen erhält und die Kunststoff-Platte als Endlosmaterial zuläuft und zwischen Träger und Kunststoff-Platte ein Klebstoff gebracht und Träger und Kunststoff-Platte trennfest und schubfest verbunden werden.

Die Kastengerippe nach vorliegender Erfindung können z.B. für Hochbauten aller Art oder für Verkehrsmittel angewendet werden. Beispiele sind Hochbauelemente, wie Container, Wartehallen, Telephonzellen usw. Bevorzugt ist die Anwendung in Verkehrsmitteln, wie Kasten für Drahtseilbahnen und insbesondere Wagenkasten von Strassen- und Schienenfahrzeugen. Zu den Strassenfahrzeugen zählen Lastkraftwagen, z.B. mit Kofferaufbauten, Busse, Omnibusse, Reisebusse, usw., Strassenbahnwagen, Schienenfahrzeuge, wie Lokomotiven und Wagen für den Personen- und Gütertransport.

Die Verkleidungselemente haben den Vorteil, dass durch die aussenliegende KunststoffPlatte, je nach Wärmeleitzahl eine gute Isolation gegen Wärme und Kälte, als auch eine Isolation gegen Schall und Resonanzen erzielt wird. Die Kunststoff-Platte ist gegen Stoss und Schlag wenig empfindlich und durch die Verbindung von Träger und Kunststoff-Platte werden die Vorteile von Verbundwerkstoffen, wie erhöhte Festigkeit gegenüber der Summe der Festigkeiten von Einzelmaterialien erreicht. Die Kunststoff-Aussenschicht ist auch gegen chemischen Angriff dem die Aussenverkleidung ausgesetzt sein kann, wie Streusalz oder Schwefeldioxid, beständig. Gegen Einflüsse von Licht, Wärme, oxidative Einflüsse usw. können die Kunststoffe durch entsprechende Additive geschützt werden. Die Verwendung von zweischichtigen Verkleidungselementen und besonders die vorgeschlagene Wahl des beschriebenen Trägers ergibt ein wesentlich breitertes Anwendungsprofil, als dies mit konventionellen Materialien zu erreichen wäre. Die zu einer Aussenverkleidung gefügten Verkleidungselemente ergeben aus jedem Betrachtungswinkel auch bei schrägem Lichteinfall eine grossflächig glatte nicht von Wellen, Buckeln, Aufwölbungen oder Einbeulungen durchzogene Oberflächenansicht. Entsprechend der Wahl der Befestigungsmittel fehlen auch die kleinflächigen Störungen in der glatten Oberfläche im Bereich der Befestigungsstellen.

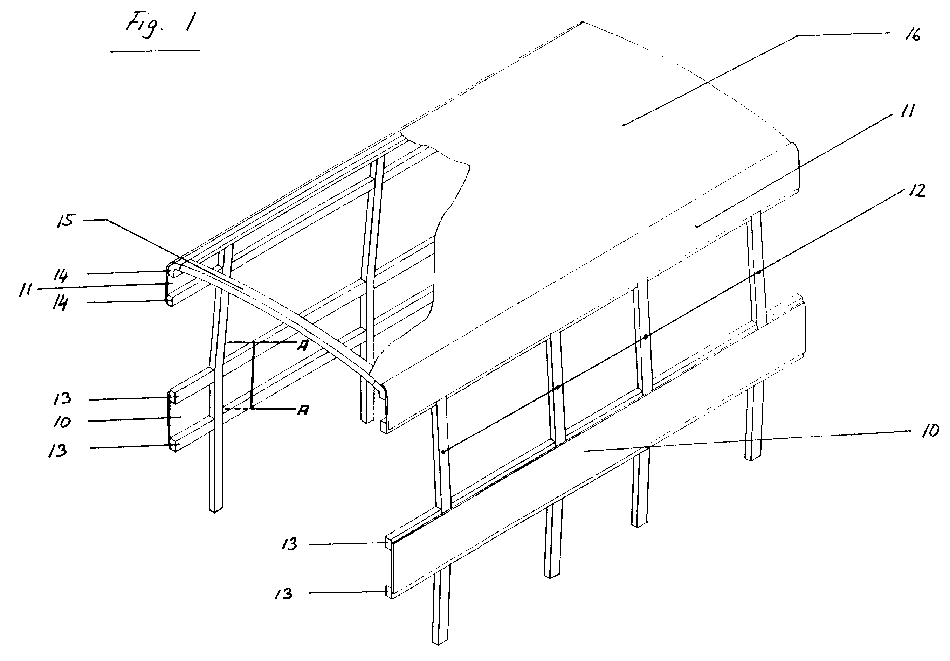

Die Figuren 1 bis 3 erläutern vorliegende Erfindung beispielhaft weiter.

Figur 1 zeigt eine Ansicht einer Kastenkonstruktion und hier insbesondere eine Wagenkastenkonstruktion. Zu erkennen sind Teile der Aussenverkleidung beispielsweise in Form der Mittelgurte (10) und Dachgurte (11) sowie des Daches (16). Die Wagenkastenkonstruktion ist eine Gitterkonstruktion aus vertikalen Profilstäben (12) und horizontalen Profilen, wie Längsprofilen (13) und Dachprofilen (14) sowie Dachspriegeln (15). Die vertikalen Profilstäbe (12) und dazwischenliegende Längs- (13) und Dachprofile (14) können beispielsweise mit Eckverbindungsstücken untereinander verbunden werden. Solche Eckverbindungsstücke und Wagenkastenkonstruktionen damit sind beispielsweise aus der CH-Patentschrift 627 982 bekannt. Die Mittelgurte (10), die Dachgurte (11) wie auch das Dach (16) kann beispielsweise erfindungsgemäss ein Verkleidungselement darstellen. Die Verkleidungselemente können entweder plan, wie die Mittelgurte (10), geknickt oder gebogen wie die Dachgurte (11) oder gebogen mit grossem Radius oder gewölbt, wie das Dach (16), sein.

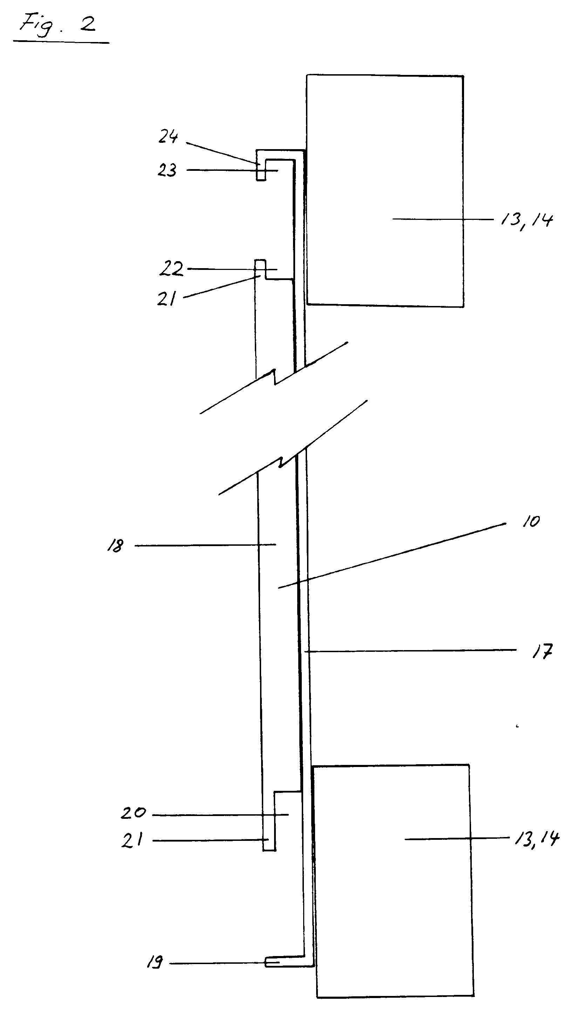

Die Figur 2 stellt einen Schnitt durch AA in Figur 1 dar und die Mittelgurte (10) stellt ein erfindungsgemässes Verkleidungselement dar. Das Verkleidungselement besteht aus einem Träger (17), auf dem eine Kunststoff-Platte (18), beispielsweise durch Kleben, schub-und trennfest angebracht ist. Die Kunststoff-Platte (18) weist an ihren Seitenkanten die Anformungen (21) auf. Die Anformungen können beispielsweise durch Ausfräsen hergestellt werden oder wenn es sich um eine Schaumstoff-Platte handelt, auch durch randständiges Verdichten des Materials, beispielsweise durch Druck und Wärme, hergestellt werden. Zwischen dem Träger (17) und der Kunststoff-Platte (18) bilden sich daher die Nuten (20, 22, 23) aus. Der Träger (17) ist an seinen Seitenrändern umgefaltet, so dass sich ein beispielsweise um 90° abgewinkelter Trägerteil (19) ergibt. Zweckmässig ist die Höhe des abgewinkelten Trägerteils (19, 24) entsprechend der Dicke der Kunststoff-Platte (18). An der gegenüberliegenden Seitenkante des Verkleidungselementes ist der Träger (17) doppelt abgewinkelt (24) unter Ausbildung einer Nut (23). Die sich dadurch bildenden ein- oder beidseitig hinterschnittenen Nuten (20, 22, 23) können zur Aufnahme von Zusatzelementen verwendet werden. Beispielweise kann in eine doppelt hinterschnittene Nut (22, 23) eine Gummidichtung oder Gummilippe, welche abdichtend gegenüber einem anstossenden Element wirkt, in eine solche Nut geklemmt oder gesteckt werden oder seitliche Abdeckschürzen können in eine Nut (20) geschoben werden. Das Verkleidungselement kann an einem Anschlussprofil, wie beispielsweise einem Längs- oder Dachprofil (13, 14), befestigt werden. Eine solche Befestigung kann beispielsweise durch Kleben, Schrauben, Nieten, Klemmen, Schraub-Klemmen und dergleichen erfolgen.

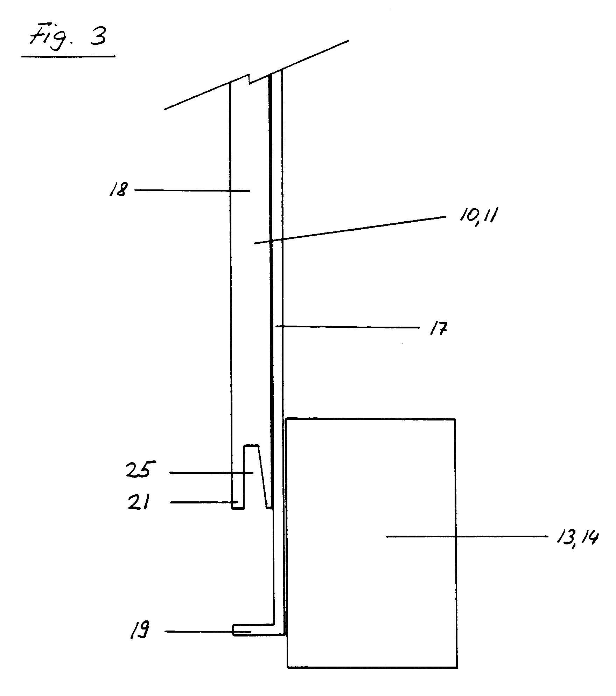

In Figur 3 ist eine weitere mögliche Ausführungsform eines Seitenrandes eines Verkleidungselementes, beispielsweise eines Mittelgurtes oder Dachgurtes gezeigt. Wiederum sichtbar ist der Träger (17) und die Kunststoff-Platte (18). Die Kunststoff-Platte weist entlang einer Seitenkante eine Nut (25) auf, welche nicht aus dem Träger (17) und der Kunststoff-Platte (18) gebildet ist, sondern beispielsweise aus der Kunststoff-Platte (18) ausgefräst oder bei Hartschaumstoff-Platten durch Druck und thermische Behandlung durch Materialverdichtung erzeugt worden ist. Eine solche Ausführungsform hat den Vorteil, dass Schubspannungen, welche zwischen Träger und Kunststoff-Platte auftreten können, von der Kunststoff-Platte (18) über die Klebung besser auf den Träger (17) verteilt, übertragen und abgebaut werden können. Der abgewinkelte Trägerteil (19) und die Anformung (21) sowie die Anschlussprofile, beispielsweise Längsprofile (13) und Dachprofile (14) haben die gleiche Bedeutung wie in Figur 2.

Die Verkleidungselemente für Wagenkasten nach vorliegender Erfindung können beispielsweise endlos hergestellt werden, indem die Kunststoff-Platte von einem Coil abgewickelt wird und auch der Träger (17) von einem Coil abgewickelt wird. Die Kunststoff-Platte kann -- falls vorgesehen -- an deren Seitenkanten kontinuierlich derart bearbeitet werden, dass die Anformungen (21), respektive die Nut (25) erzeugt werden. Zwischen Träger und Kunststoff-Platte ein Befestigungsmittel angeordnet, beispielsweise kann kontinuierlich Klebstoff aufgesprüht, aufgedruckt, aufgerakelt oder aufgestrichen werden, wobei dies vollflächig oder teilflächig mit einem Auftragemuster erfolgen kann. Es ist auch möglich, sowohl Träger als auch Kunststoff-Platte an den vorgesehenen Klebestellen je mit Klebstoff zu behandeln, wobei dieser Klebstoff ein Einkomponenten- oder Zweikomponenten-Klebstoff sein kann. Durch Wärme und/oder Druckanwendung können die Klebeprozesse initiiert oder beschleunigt werden. Sinngemäss können auch andere Befestigungsmittel, wie z.B. oben aufgeführt, eingesetzt werden. Die Abwinklung des Trägers (17) zum einfach abgewinkelten Trägerteil (19), respektive zum doppelt abgewinkelten Trägerteil (24) --sofern vorgesehen -- kann kontinuierlich nach dem Abwickeln des Trägers vom Coils erfolgen. Entsprechend der gewünschten Länge eines Verkleidungselementes können die kontinuierlich erzeugten Verkleidungselemente abgelängt werden. Werden die Stirnseiten der Verkleidungselemente mit einem sauberen Trennschnitt abgelängt, so können die Verkleidungselemente - - falls notwendig oder gewünscht -- Stoss an Stoss beim Anbau an die Gitterkonstruktion gefügt werden. Somit ist es möglich, entweder über die ganze Länge einer Kastenkonstruktion ein Verkleidungselement vorzusehen oder durch Fügen Stoss an Stoss mehrere Verkleidungselemente über die Länge der Kastenkonstruktion vorzusehen. In der Höhe, resp. Breite, richten sich die Masse der Verkleidungselemente nach der vorgesehenen Konstruktion. So können beispielsweise mehrere Verkleidungselemente übereinander anstossend angeordnet werden oder Verkleidungselemente können beispielsweise an Fenster- oder Türöffnungen anstossen.

Es ist beispielsweise auch möglich, das Kastengerippe mit den Trägern auszustatten, wobei die Träger durch Verkleben, Verschweissen, Verschrauben, Vernieten usw. an den Profilen des Kastengerippes befestigt werden können und anschliessend die Kunststoff-Platten an den Trägern festgelegt werden. Diese Variante ermöglicht beispielsweise die Trägergrösse unabhängig von der Kunststoff-Plattengrösse zu wählen und mehrere Stoss an Stoss gefügte Träger mit einer einzigen Kunststoff-Platte zu überdecken. Geeignete Befestigungsmittel für diese Variante wurden oben genannt. Bevorzugte Befestigungsmittel sind Klebstoffe und insbesondere Klettbänder. Klettbänder ermöglichen in allen Anwendungsfällen einen zerstörungsfreien Austausch von Kunststoff-Platten.

## Patentansprüche

1. Kastengerippe mit einer Aussenverkleidung enthaltend flächenförmige mehrschichtige Verkleidungselemente,
dadurch gekennzeichnet, dass
die Verkleidungselemente zweischichtig sind und eine erste Schicht der Verkleidungselemente ein Träger (17) aus hochfestem Material ist und eine zweite Schicht eine trenn- und schubfest mit dem Träger verbundene Kunststoff-Platte (18) mit glatter äusserer Oberfläche darstellt, wobei der Träger (17) des Verkleidungselementes ein Blech aus Metall und die Kunststoff-Platte (18) eine Hartschaumstoff-Platte aus einem geschlossenzelligen Polymerschaum, enthaltend Polyvinylchlorid oder Polycarbonat, ist und dass der Träger (17) am Kastengerippe angelegt wird und das Kastengerippe durch die angelegten Verkleidungselemente selbsttragend ist und die Kunststoff-Platte (18) die grossflächig glatte Aussenseite der Aussenverkleidung mit hoher struktureller Festigkeit der Oberflächenschicht bildet.

2. Kastengerippe nach Anspruch 1, dadurch gekennzeichnet, dass die Aussenverkleidung Teile des oder das ganze Kastengerippe abdeckt und die Aussenverkleidung durch ein Verkleidungselement oder eine Mehrzahl von Verkleidungselementen gebildet wird.

3. Kastengerippe nach Anspruch 1, dadurch gekennzeichnet, dass die Aussenverkleidung von zwei oder mehreren Verkleidungselementen gebildet wird und die Verkleidungselemente stossfrei gefügt werden.

4. Kastengerippe nach Anspruch 1, dadurch gekennzeichnet, dass der Träger (17) und die Kunststoff-Platte (18) gegenseitig mit Befestigungsmitteln verbunden sind und vorzugsweise mit Klebstoff verklebt oder mit Klettband verklettet sind.

5. Kastengerippe nach Anspruch 1, dadurch gekennzeichnet, dass der Träger (17) an den Seitenkanten abgewinkelt, umgebördelt oder eingerollt (19, 24) ist und dass die Kunststoff-Platte entlang den Seitenkanten eine Hinterschneidung oder eine Nut (20, 22, 23, 25) aufweist und dadurch das Verkleidungselement im Querschnitt entlang einer oder beider Seiterkanten ein- oder beidseitig hinterschnittene Nuten (20, 22, 23, 25) für die Aufnahme von Zusatzelementen aufweist.

6. Verfahren zur Herstellung von Aussenverkleidungen für Kastengerippe nach Anspruch 1, dadurch gekennzeichnet, dass der Träger (17) als Endlosmaterial zuläuft, der Träger die Querschnittsform durch Walzen oder Biegen erhält und die Kunststoff-Platte (18) als Endlosmaterial zuläuft und zwischen Träger (17) und Kunststoff-Platte (18) ein Klebstoff gebracht und Träger (17) und Kunststoff-Platte (18) trennfest und schubfest verbunden werden.

7. Wagenkasten enthaltend ein Kastengerippe mit Aussenverkleidung nach Anspruch 1.

8. Wagenkasten für Strassen- und Schienenfahrzeuge enthaltend ein Kastengerippe mit Aussenverkleidung nach Anspruch 1.

## Claims

1. Body framework having external panelling containing laminar multi-layer panelling elements, characterised in that the panelling elements have two layers and a first layer of the panelling elements is a support (17) of high-strength material, and a second layer is a plastic panel (18) joined to the support to be resistant to separation and shearing having smooth outer surface, wherein the support (17) of the panelling element is a sheet of metal and the plastic panel (18) is a hard foam panel made from a closed-cell polymer foam containing polyvinyl chloride or polycarbonate, and in that the support (17) is laid against the body framework and the body framework is self-supporting due to the installed panelling elements, and the plastic panel (18) forms the large surface area smooth outer side of the external panelling with high structural strength of the surface layer.

2. Body framework according to claim 1, characterised in that the external panelling covers parts of the body framework or the whole of it and the external panelling is formed by a panelling element or a plurality of panelling elements.

3. Body framework according to claim 1, characterised in that the external panelling is formed by two or more panelling elements and the panelling elements are joined smoothly.

4. Body framework according to claim 1, characterised in that the support (17) and the plastic panel (18) are joined mutually using attachment means and are adhered preferably using adhesive or attached using velcro tape.

5. Body framework according to claim 1, characterised in that the support (17) is bent, beaded or rolled (19, 24) at the side edges, and in that the plastic panel has an undercut or a groove (20, 22, 23, 25) along the side edges, and hence the panelling element in cross-section along one or both side edges has grooves (20, 22, 23, 25) undercut on one or both sides for receiving additional elements.

6. Process for producing external panelling for body frameworks according to claim 1, characterised in that the support (17) is supplied as continuous material, the support obtains the cross-sectional shape by rolling or bending and the plastic panel (18) is supplied as continuous material and an adhesive is introduced between support (17) and plastic panel (18) and support (17) and plastic panel (18) are joined to be resistant to separation and shearing.

7. Carriage body containing a body framework having external panelling according to claim 1.

8. Carriage body for road and rail vehicles containing a body framework having external panelling according to claim 1.

## Revendications

1. Ossature de caisse avec un habillage extérieur comprenant des éléments d'habillage plans à plusieurs couches, caractérisée en ce que les éléments d'habillage sont à deux couches et en ce qu'une première couche des éléments d'habillage est un support (17) en matériau à haute solidité, et une seconde couche est une plaque de plastique (18) à surface extérieure lisse solidarisée au support de façon à résister à la séparation et au glissement, le support (17) de l'élément d'habillage étant une tôle de métal et la plaque de plastique (18) une plaque de mousse rigide faite de mousse polymère à alvéoles fermées, contenant du chlorure de polyvinyle ou du polycarbonate, et en ce que le support (17) est appliqué sur l'ossature de caisse et l'ossature de caisse est rendue autoportante par les éléments d'habillage appliqués, et la plaque de plastique (18) constitue la face extérieure, lisse sur une grande surface, de l'habillage extérieur, avec une solidité structurelle élevée de la couche superficielle.

2. Ossature de caisse selon la revendication 1, caractérisée en ce que l'habillage extérieur recouvre des parties de l'ossature de caisse ou toute cette dernière, et en ce que l'habillage extérieur est formé par un élément d'habillage ou une pluralité d'éléments d'habillage.

3. Ossature de caisse selon la revendication 1, caractérisée en ce que l'habillage extérieur est constitué de deux ou de plusieurs éléments d'habillage, et en ce que les éléments d'habillage sont assemblés sans joint.

4. Ossature de caisse selon la revendication 1, caractérisée en ce que le support (17) et la plaque de plastique (18) sont reliés mutuellement par des moyens de fixation et, de préférence, collés avec de la colle ou accrochés avec une bande auto-accrochante.

5. Ossature de caisse selon la revendication 1, caractérisée en ce que le support (17) est coudé, bordé ou roulé (19, 24) sur les bords latéraux, et en ce que la plaque de plastique présente, le long des bords latéraux, une dépouille inverse ou une rainure (20, 22, 23, 25) et en ce que de ce fait, l'élément d'habillage présente, en section transversale, le long d'un bord latéral ou des deux, des rainures (20, 22, 23, 25) à dépouille inverse unilatérale ou bilatérale destinées à recevoir des éléments supplémentaires.

6. Procédé pour fabriquer des habillages extérieurs destinés à des ossatures de caisse selon la revendication 1, caractérisé en ce que le support (17) est amené sous forme de matériau continu, en ce que le support reçoit sa forme de section transversale par laminage ou pliage, et en ce que la plaque de matière plastique (18) est amenée sous forme de matériau continu, et en ce qu'une colle est appliquée entre le support (17) et la plaque de matière plastique (18), le support (17) et la plaque de matière plastique (18) étant solidarisés de façon à résister à la séparation et au glissement.

7. Caisse de voiture comprenant une ossature de caisse avec habillage extérieur selon la revendication 1.

8. Caisse de voiture pour véhicules routiers et ferroviaires comprenant une ossature de caisse avec habillage extérieur selon la revendication 1.
